(19)

Europäisches
Patentamt
European
Patent Office
Office européen
des brevets

(11) **EP 3 091 738 A1**

(12) **EUROPEAN PATENT APPLICATION**
published in accordance with Art. 153(4) EPC

(43) Date of publication:
**09.11.2016 Bulletin 2016/45**

(21) Application number: **15765990.5**

(22) Date of filing: **06.03.2015**

(51) Int Cl.:
***H04N 13/00*** *(2006.01)*

(86) International application number:
**PCT/CN2015/073744**

(87) International publication number:
**WO 2015/139563 (24.09.2015 Gazette 2015/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **21.03.2014 CN 201410110039**

(71) Applicant: **Huawei Technologies Co., Ltd
Shenzhen, Guangdong 518129 (CN)**

(72) Inventor: **ZHENG, Xiaozhen
Shenzhen,
Guangdong 518129 (CN)**

(74) Representative: **Pfenning, Meinig & Partner mbB
Patent- und Rechtsanwälte
Theresienhöhe 11a
80339 München (DE)**

(54) **DEPTH IMAGE CODING/DECODING METHOD AND CODING/DECODING DEVICE**

(57)    The present invention provides a depth image coding/decoding method and apparatus. In a technical solution of the present invention, a first residual is obtained according to an average value of numerical values of sample points in the first partition and a prediction value of the first partition, and a second residual is obtained according to an average value of numerical values of sample points in the second partition and a prediction value of the second partition; and the foregoing first residual and second residual are coded.

```
┌─────────────────────────────────────────────┐
│ Acquire a prediction value of a first         │      101
│ partition and a prediction value of a second  │
│ partition from coded sample points adjacent to │
│ a current image block                         │
└─────────────────────────────────────────────┘
                      │
                      ▼
┌─────────────────────────────────────────────┐
│ Obtain a first residual according to an        │      102
│ average value of numerical values of sample    │
│ points in the first partition and the prediction│
│ value of the first partition, and obtain a second│
│ residual according to an average value of       │
│ numerical values of sample points in the       │
│ second partition and the prediction value of    │
│ the second partition                          │
└─────────────────────────────────────────────┘
                      │
                      ▼
┌─────────────────────────────────────────────┐
│ Code the foregoing first residual and the      │      103
│ foregoing second residual                     │
└─────────────────────────────────────────────┘
```

FIG. 1

## Description

## TECHNICAL FIELD

Embodiments of the present invention relate to image processing technologies, and in particular, to a depth image coding/decoding method and apparatus.

## BACKGROUND

Because a three-dimensional video image system includes two types of image information, view image and depth image, an image visual effect is good, and the system is widely used.

In the prior art, a depth image of a three-dimensional video image is usually coded or decoded in a manner of segment-wise "DC" coding (Segment-wise DC Coding, SDC for short) depth modelling mode (Depth modelling mode, DMM for short) 1 or SDC-DMM4. The SDC-DMM coding manner is: dividing a current image block into two continuous partitions (partition) according to a DMM1 partitioning manner, that is, dividing the current image block into two partitions by using a straight line, where the two partitions are respectively a partition 0 and a partition 1, and each partition includes at least one vertex angle of the current image block; acquiring prediction values of the two partitions of the current image block by using a coded sample adjacent to the current image block (for example, a left adjacent column or an upper adjacent row), where the prediction values are respectively referred to as "DC0" and "DC1", and reference may be made to the prior art for a specific manner for acquiring "DC0" and "DC1"; for example, "DC0" may be a numerical value of a sample point in the middle of the upper adjacent row, and "DC1" may be a numerical value of a sample point at the bottom end of the left adjacent column; constructing a prediction block of the current image block according to the foregoing "DC0" and "DC1" (filling the partition 0 of the current image block with "DC0", and filling the partition 1 of the current image block with "DC1"); then determining two different pixel values of four vertex angle sample points of the prediction block of the current image block as "SDC-DC0" and "SDC-DC1"; acquiring a difference between an average value of numerical values of sample points in the partition 0 of the current image block and the foregoing "SDC-DC0", where the difference is referred to as a first residual, and acquiring a difference between an average value of numerical values of sample points in the partition 1 of the current image block and the foregoing "SDC-DC1", where the difference is referred to as a second residual; and coding the foregoing first residual and second residual. A decoder side performs decoding by using processing inverse to that of the encoder side. The SDC-DMM4 coding manner is: dividing a current image block into two arbitrary partitions in a DMM4 partitioning manner, where the two partitions are respectively a partition 2 and a partition 3, the partition 2 may be spatially connected or spatially disconnected, and the partition 3 may also be spatially connected or spatially disconnected; acquiring prediction values of the two partitions of the current image block by using a coded sample adjacent to the current image block (for example, a left adjacent column or an upper adjacent row), where the prediction values are respectively referred to as "DC2" and "DC3", and reference may be made to the prior art for a specific manner for acquiring "DC2" and "DC3"; constructing a prediction block of the current image block according to the foregoing "DC2" and "DC3" (filling the partition 2 of the current image block with "DC2", and filling the partition 3 of the current image block with "DC3"); then traversing numerical values of sample points of the prediction block of the current image block to acquire two different pixel values as "SDC-DC2" and "SDC-DC3"; acquiring a difference between an average value of numerical values of sample points in the partition 2 of the current image block and the foregoing "SDC-DC2", where the difference is referred to as a third residual, and acquiring a difference between an average value of numerical values of all sample points in the partition 3 of the current image block and the foregoing "SDC-DC3", where the difference is referred to as a fourth residual; and coding the foregoing third residual and fourth residual. A decoder side performs decoding by using processing inverse to that of the encoder side.

However, with the coding or decoding method in the prior art used, a coding or decoding manner is complex, and complexity of a coding or decoding system is increased.

## SUMMARY

Embodiments of the present invention provide a depth image coding/decoding method and apparatus to reduce complexity of a coding or decoding system.

A first aspect of the embodiments of the present invention provides a depth image coding method, including:

acquiring a prediction value of the first partition and a prediction value of the second partition from coded sample points adjacent to the current image block, where the first partition and the second partition are obtained according to a partitioning manner of the current image block;
obtaining a first residual according to an average value of numerical values of sample points in the first partition and the prediction value of the first partition, and obtaining a second residual according to an average value of numerical values of sample points in the second partition and the prediction value of the second partition; and
coding the first residual and the second residual.

With reference to the first aspect, in a first possible implement manner, the acquiring a prediction value of the first partition and a prediction value of the second partition from coded sample points adjacent to the current image block includes:

selecting, according to the partitioning manner of the current image block, at least two sample points from coded sample points in an upper row or a left column adjacent to the current image block, performing an arithmetic operation on numerical values of the at least two sample points, and using an operation result as the prediction value of the first partition or the prediction value of the second partition; or
selecting, according to the partitioning manner of the current image block, one sample point from coded sample points in an upper row or a left column adjacent to the current image block, and using a numerical value of the sample point as the prediction value of the first partition or the prediction value of the second partition; or
selecting, according to the partitioning manner of the current image block, at least one sample point from a coded upper row adjacent to the current image block and at least one sample point from a coded left column adjacent to the current image block, performing an arithmetic operation on a numerical value of the at least one sample point selected from the upper row and a numerical value of the at least one sample point selected from the left column, and using an operation result as the prediction value of the first partition or the prediction value of the second partition.

With reference to the first possible implementation manner, in a second possible implementation manner, the performing an arithmetic operation on numerical values of the at least two sample points includes:

performing an averaging operation on the numerical values of the at least two sample points; or
performing weighted averaging on the numerical values of the at least two sample points.

With reference to the first aspect, in a third possible implementation manner, that the first partition and the second partition are obtained according to a partitioning manner of the current image block includes:

the first partition and the second partition of the current image block of a depth image are obtained by partitioning by using a straight line; or
the first partition and the second partition of the current image block of a depth image are partitioned into arbitrary shapes, where the first partition is spatially connected or spatially disconnected, and the second partition is spatially connected or spatially disconnected.

With reference to the first aspect or any one possible implementation manner of the first to the third possible implementation manners of the first aspect, in a fourth possible implementation manner, the obtaining a first residual according to an average value of numerical values of sample points in the first partition and the prediction value of the first partition, and obtaining a second residual according to an average value of numerical values of sample points in the second partition and the prediction value of the second partition includes:

acquiring a difference between the average value of the numerical values of the sample points in the first partition and the prediction value of the first partition, and using the difference between the average value of the numerical values of the sample points in the first partition and the prediction value of the first partition as the first residual, and acquiring a difference between the average value of the numerical values of the sample points in the second partition and the prediction value of the second partition, and using the difference between the average value of the numerical values of the sample points in the second partition and the prediction value of the second partition as the second residual.

With reference to the first aspect or any one possible implementation manner of the first to the third possible implementation manners of the first aspect, in a fifth possible implementation manner, the obtaining a first residual according to an average value of numerical values of sample points in the first partition and the prediction value of the first partition, and obtaining a second residual according to an average value of numerical values of sample points in the second partition and the prediction value of the second partition includes:

acquiring a difference between the average value of the numerical values of the sample points in the first partition and the prediction value of the first partition, mapping the difference between the average value of the numerical values of the sample points in the first partition and the prediction value of the first partition into a first mapping value, and using the first mapping value as the first residual, and acquiring a difference between the average value of the numerical values of the sample points in the second partition and the prediction value of the second partition, mapping the difference between the average value of the numerical values of the sample points in the second partition and the prediction value of the second partition into a second mapping value, and using the first mapping value as the second residual.

With reference to the first aspect or any one possible implementation manner of the first to the third possible implementation manners of the first aspect, in a sixth possible implementation manner, the obtaining a first residual according to an average value of numerical values of sample points in the first partition and the prediction value of the first partition, and obtaining a second residual according to an average value of numerical values of sample points in the second partition and the prediction value of the second partition includes:

acquiring the average value of the numerical values of the sample points in the first partition, mapping the average value of the numerical values of the sample points in the first partition into a third mapping value, and acquiring the average value of the numerical values of the sample points in the second partition, and mapping the average value of the numerical values of the sample points in the second partition into a fourth mapping value;

acquiring the prediction value of the first partition, and mapping the prediction value of the first partition into a fifth mapping value, and acquiring the prediction value of the second partition, and mapping the prediction value of the second partition into a sixth mapping value; and

acquiring a difference between the third mapping value and the fifth mapping value, and using the difference between the third mapping value and the fifth mapping value as the first residual, and acquiring a difference between the fourth mapping value and the sixth mapping value, and using the difference between the fourth mapping value and the sixth mapping value as the second residual.

A second aspect of the embodiments of the present invention provides a depth image decoding method, including:

acquiring a prediction value of the first partition and a prediction value of the second partition from decoded sample points adjacent to the current image block, where the first partition and the second partition are obtained according to a partitioning manner of the current image block;

obtaining a first reconstruction value according to a first residual and the prediction value of the first partition, and obtaining a second reconstruction value according to a second residual and the prediction value of the second partition; and

performing a decoding operation according to the first reconstruction value and the second reconstruction value.

With reference to the second aspect, in a first possible implement manner, the acquiring a prediction value of the first partition and a prediction value of the second partition from decoded sample points adjacent to the current image block includes:

selecting, according to the partitioning manner of the current image block, at least two sample points from decoded sample points in an upper row or a left column adjacent to the current image block, performing an arithmetic operation on numerical values of the at least two sample points, and using an operation result as the prediction value of the first partition or the prediction value of the second partition; or

selecting, according to the partitioning manner of the current image block, one sample point from decoded sample points in an upper row or a left column adjacent to the current image block, and using a numerical value of the sample point as the prediction value of the first partition or the prediction value of the second partition; or

selecting, according to the partitioning manner of the current image block, at least one sample point from a decoded upper row adjacent to the current image block and at least one sample point from a decoded left column adjacent to the current image block, performing an arithmetic operation on a numerical value of the at least one sample point selected from the upper row and a numerical value of the at least one sample point selected from the left column, and using an operation result as the prediction value of the first partition or the prediction value of the second partition.

With reference to the first possible implementation manner, in a second possible implementation manner, the performing an arithmetic operation on numerical values of the at least two sample points includes:

performing an averaging operation on the numerical values of the at least two sample points; or

performing weighted averaging on the numerical values of the at least two sample points.

With reference to the second aspect, in a third possible implementation manner, that the first partition and the second partition are obtained according to a partitioning manner of the current image block includes:

the first partition and the second partition of the current image block of a depth image are obtained by partitioning by using a straight line; or

the first partition and the second partition of the current image block of a depth image are partitioned into arbitrary shapes, where the first partition is spatially connected or spatially disconnected, and the second partition is spatially connected or spatially disconnected.

With reference to the second aspect or any one possible implementation manner of the first to the third possible implementation manners of the second aspect, in a fourth possible implementation manner, the obtaining a first reconstruction value according to a first residual and the prediction value of the first partition, and obtaining a second reconstruction value according to a second residual and the prediction value of the second partition includes:

acquiring the first residual, and using a sum value of the first residual and the prediction value of the first partition as the first reconstruction value, and acquiring the second residual, and using a sum value of the second residual and the prediction value of the second partition as the second reconstruction value.

With reference to the second aspect or any one possible implementation manner of the first to the third possible implementation manners of the second aspect, in a fifth possible implementation manner, the obtaining a first reconstruction value according to a first residual and the prediction value of the first partition, and obtaining a second reconstruction value according to a second residual and the prediction value of the second partition includes:

acquiring the first residual, and mapping the first residual into a seventh mapping value, and acquiring the second residual, and mapping the second residual into an eighth mapping value; and
acquiring a sum value of the prediction value of the first partition and the seventh mapping value as the first reconstruction value, and acquiring a sum value of the prediction value of the second partition and the eighth mapping value as the second reconstruction value.

With reference to the second aspect or any one possible implementation manner of the first to the third possible implementation manners of the second aspect, in a sixth possible implementation manner, the obtaining a first reconstruction value according to a first residual and the prediction value of the first partition, and obtaining a second reconstruction value according to a second residual and the prediction value of the second partition includes:

acquiring the prediction value of the first partition, and mapping the prediction value of the first partition into a ninth mapping value, and acquiring the prediction value of the second partition, and mapping the prediction value of the second partition into a tenth mapping value; and
acquiring a sum value of the ninth mapping value and the first residual, mapping the sum value into an eleventh mapping value, and using the eleventh mapping value as the first reconstruction value, and acquiring a sum value of the tenth mapping value and the second residual, mapping the sum value into a twelfth mapping value, and using the twelfth mapping value as the second reconstruction value.

A third aspect of the embodiments of the present invention provides a depth image coding apparatus, including:

an acquiring module, configured to acquire a prediction value of the first partition and a prediction value of the second partition from coded sample points adjacent to the current image block, where the first partition and the second partition are obtained according to a partitioning manner of the current image block; a processing module, configured to obtain a first residual according to an average value of numerical values of sample points in the first partition and the prediction value of the first partition, and obtain a second residual according to an average value of numerical values of sample points in the second partition and the prediction value of the second partition; and

a coding module, configured to code the first residual and the second residual.

With reference to the third aspect, in a first possible implement manner, the acquiring module is specifically configured to select, according to the partitioning manner of the current image block, at least two sample points from coded sample points in an upper row or a left column adjacent to the current image block, perform an arithmetic operation on numerical values of the at least two sample points, and use an operation result as the prediction value of the first partition or the prediction value of the second partition; or select, according to the partitioning manner of the current image block, one sample point from coded sample points in an upper row or a left column adjacent to the current image block, and use a numerical value of the sample point as the prediction value of the first partition or the prediction value of the second partition; or select, according to the partitioning manner of the current image block, at least one sample point from a coded upper row adjacent to the current image block and at least one sample point from a coded left column adjacent to the current image block, perform an arithmetic operation on a numerical value of the at least one sample point selected from the upper row and a numerical value of the at least one sample point selected from the left column, and use an operation result as the prediction value of the first partition or the prediction value of the second partition.

With reference to the first possible implementation manner, in a second possible implementation manner, the acquiring module is specifically configured to perform an averaging operation on the numerical values of the at least two sample points; or perform weighted averaging on the numerical values of the at least two sample points.

With reference to the third aspect, in a third possible implementation manner, the acquiring module is specifically configured to: the first partition and the second partition of the current image block of a depth image are obtained by partitioning by using a straight line; or the first partition and the second partition of the current image block of a depth image are partitioned into arbitrary shapes, where the first partition is spatially connected or spatially disconnected, and the second partition is spatially connected or spatially disconnected.

With reference to the third aspect or any one possible implementation manner of the first to the third possible implementation manners of the third aspect, in a fourth possible implementation manner, the processing module is specifically configured to acquire a difference between the average value of the numerical values of the sample points in the first partition and the prediction value of the first partition, and use the difference between the average value of the numerical values of the sample points in the first partition and the prediction value of the first partition as the first residual, and acquire a difference between the average value of the numerical values of the sample points in the second partition and the prediction value of the second partition, and use the difference between the average value of the numerical values of the sample points in the second partition and the prediction value of the second partition as the second residual.

With reference to the third aspect or any one possible implementation manner of the first to the third possible implementation manners of the third aspect, in a fifth possible implementation manner, the processing module is specifically configured to acquire a difference between the average value of the numerical values of the sample points in the first partition and the prediction value of the first partition, map the difference between the average value of the numerical values of the sample points in the first partition and the prediction value of the first partition into a first mapping value, and use the first mapping value as the first residual, and acquire a difference between the average value of the numerical values of the sample points in the second partition and the prediction value of the second partition, map the difference between the average value of the numerical values of the sample points in the second partition and the prediction value of the second partition into a second mapping value, and use the first mapping value as the second residual.

With reference to the third aspect or any one possible implementation manner of the first to the third possible implementation manners of the third aspect, in a sixth possible implementation manner, the processing module is specifically configured to acquire the average value of the numerical values of the sample points in the first partition, map the average value of the numerical values of the sample points in the first partition into a third mapping value, and acquire the average value of the numerical values of the sample points in the second partition, and map the average value of the numerical values of the sample points in the second partition into a fourth mapping value; acquire the prediction value of the first partition, and map the prediction value of the first partition into a fifth mapping value, and acquire the prediction value of the second partition, and map the prediction value of the second partition into a sixth mapping value; and acquire a difference between the third mapping value and the fifth mapping value, and use the difference between the third mapping value and the fifth mapping value as the first residual, and acquire a difference between the fourth mapping value and the sixth mapping value, and use the difference between the fourth mapping value and the sixth mapping value as the second residual.

A fourth aspect of the embodiments of the present invention provides a depth image decoding apparatus, including:

an acquiring module, configured to acquire a prediction value of the first partition and a prediction value of the second partition from decoded sample points adjacent to the current image block, where the first partition and the second partition are obtained according to a partitioning manner of the current image block;

a processing module, configured to obtain a first reconstruction value according to a first residual and the prediction value of the first partition, and obtain a second reconstruction value according to a second residual and the prediction value of the second partition; and

a decoding module, configured to perform a decoding operation according to the first reconstruction value and the second reconstruction value.

With reference to the fourth aspect, in a first possible implement manner, the acquiring module is specifically configured to select, according to the partitioning manner of the current image block, at least two sample points from decoded sample points in an upper row or a left column adjacent to the current image block, perform an arithmetic operation on numerical values of the at least two sample points, and use an operation result as the prediction value of the first partition or the prediction value of the second partition; or select, according to the partitioning manner of the current image block, one sample point from decoded sample points in an upper row or a left column adjacent to the current image block, and use a numerical value of the sample point as the prediction value of the first partition or the prediction value of the second partition; or select, according to the partitioning manner of the current image block, at least one sample point from a decoded upper row adjacent to the current image block and at least one sample point from a decoded left column adjacent to the current image block, perform an arithmetic operation on a numerical value of the at least one sample point selected from the upper row and a numerical value of the at least one sample point selected from the left column, and use an operation result as the prediction value of the first partition or the prediction value of the second partition.

With reference to the first possible implementation manner, in a second possible implementation manner, the acquiring module is specifically configured to perform an averaging operation on the numerical values of the at least two sample points; or perform weighted averaging on the numerical values of the at least two sample points.

With reference to the fourth aspect, in a third possible implementation manner, the acquiring module is specifically configured to: the first partition and the second partition of the current image block of a depth image are obtained by partitioning by using a straight line; or the first partition and the second partition of the current image block of a depth image are partitioned into arbitrary shapes, where the first partition is spatially connected or spatially disconnected, and the second partition is spatially connected or spatially disconnected.

With reference to the fourth aspect or any one possible implementation manner of the first to the third possible implementation manners of the fourth aspect, in a fourth possible implementation manner, the processing module is specifically configured to acquire the first residual, and use a sum value of the first residual and the prediction value of the first partition as the first reconstruction value, and acquire the second residual, and use a sum value of the second residual and the prediction value of the second partition as the second reconstruction value.

With reference to the fourth aspect or any one possible implementation manner of the first to the third possible implementation manners of the fourth aspect, in a fifth possible implementation manner, the processing module is specifically configured to acquire the first residual, and map the first residual into a seventh mapping value, and acquire the second residual, and map the second residual into an eighth mapping value; and acquire a sum value of the prediction value of the first partition and the seventh mapping value as the first reconstruction value, and acquire a sum value of the prediction value of the second partition and the eighth mapping value as the second reconstruction value.

With reference to the fourth aspect or any one possible implementation manner of the first to the third possible implementation manners of the fourth aspect, in a sixth possible implementation manner, the processing module is specifically configured to acquire the prediction value of the first partition, and map the prediction value of the first partition into a ninth mapping value, and acquire the prediction value of the second partition, and map the prediction value of the second partition into a tenth mapping value; and acquire a sum value of the ninth mapping value and the first residual, map the sum value into an eleventh mapping value, and use the eleventh mapping value as the first reconstruction value, and acquire a sum value of the tenth mapping value and the second residual, map the sum value into a twelfth mapping value, and use the twelfth mapping value as the second reconstruction value.

The embodiments of the present invention provide a depth image coding/decoding method and apparatus. In a technical solution of the present invention, a first residual is obtained according to an average value of numerical values of sample points in the first partition and a prediction value of the first partition, and a second residual is obtained according to an average value of numerical values of sample points in the second partition and a prediction value of the second partition; and the foregoing first residual and second residual are coded. Because the prediction value of the first partition and the prediction value of the second partition are acquired from coded sample points adjacent to a current image block, a process of determining the prediction value of the first partition and the prediction value of the second partition from a prediction block is not required. Therefore, a coding or decoding manner of the present invention is simple, and complexity of a coding or decoding system is reduced.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic flowchart of Embodiment 1 of a depth image coding method according to the present invention;
FIG. 2 is a schematic diagram of a current image block obtained by using a first partitioning manner according to the present invention;
FIG. 3 is a schematic diagram of a current image block obtained by using a second partitioning manner according to the present invention;
FIG. 4 is a first schematic diagram of acquiring a prediction value of a first partition or a prediction value of a second partition according to the present invention;
FIG. 5 is a second schematic diagram of acquiring a prediction value of a first partition or a prediction value of a second partition according to the present invention;
FIG. 6 is a third schematic diagram of acquiring a prediction value of a first partition or a prediction value of a second partition according to the present invention;
FIG. 7 is a schematic flowchart of Embodiment 1 of a depth image decoding method according to the present invention;
FIG. 8 is a schematic structural diagram of Embodiment 1 of a depth image coding apparatus according to the present invention;
FIG. 9 is a schematic structural diagram of Embodiment 1 of a depth image decoding apparatus according to the present invention;
FIG. 10 is a schematic block diagram of a depth image coding device according to another embodiment of the present invention; and
FIG. 11 is a schematic block diagram of a depth image decoding device according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in orders other than the order illustrated or described herein. Moreover, the terms "include", "contain" and any other variants mean to cover the non-exclusive inclusion, for example, a process, method, system, product, or device that includes a list of steps or units is not necessarily limited to those units, but may include other steps or units not expressly listed or inherent to such a process, method, system, product, or device.

The present invention is mainly as follows: a prediction value of a first partition and a prediction value of a second partition are directly acquired from coded sample points adjacent to a current image block without requiring a process of determining the prediction value of the first partition and the prediction value of the second partition from a prediction block; a first residual is obtained according to an average value of numerical values of sample points in the foregoing first partition and the foregoing prediction value of the first partition that is directly acquired from the adjacent coded sample points, and a second residual is obtained according to an average value of numerical values of sample points in the foregoing second partition and the foregoing prediction value of the second partition that is directly acquired from the adjacent coded sample points; and the first residual and the second residual are coded. In a decoding process, a method for acquiring a prediction value of a first partition and a prediction value of a second partition is the same as that of the encoder side, and the process of determining the prediction value of the first partition and the prediction value of the second partition from a prediction block is not required either. In the foregoing technical solutions, the process of determining the prediction value of the first partition and the prediction value of the second partition from the prediction block is not required, and therefore, a coding or decoding manner of the technical solutions of the present invention is simple, and complexity of a coding or decoding system is reduced.

Specific embodiments are used below to describe in detail the technical solutions of the present invention. The following several specific embodiments may be combined with each other, and a same or similar concept or process may not be described repeatedly in some embodiments.

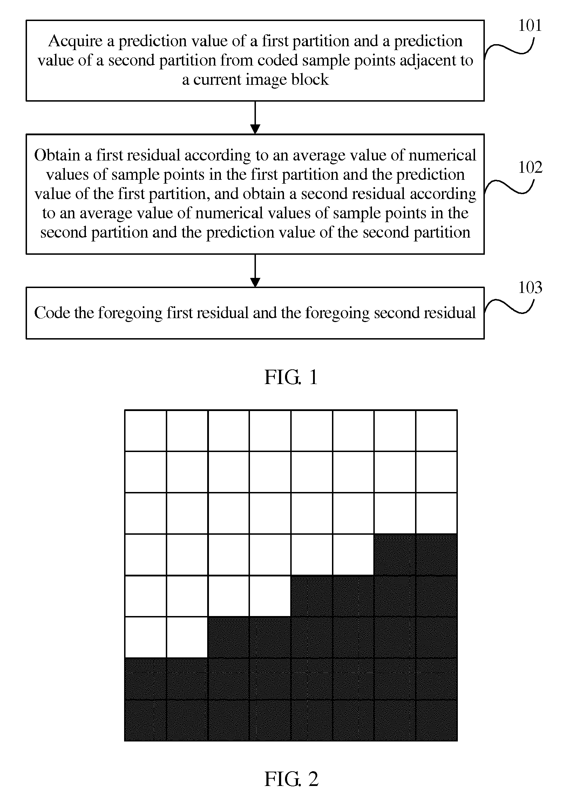

FIG. 1 is a schematic flowchart of Embodiment 1 of a depth image coding method according to the present invention. As shown in FIG. 1, a method of this embodiment includes:

> S101: Acquire a prediction value of a first partition and a prediction value of a second partition from coded sample points adjacent to a current image block.

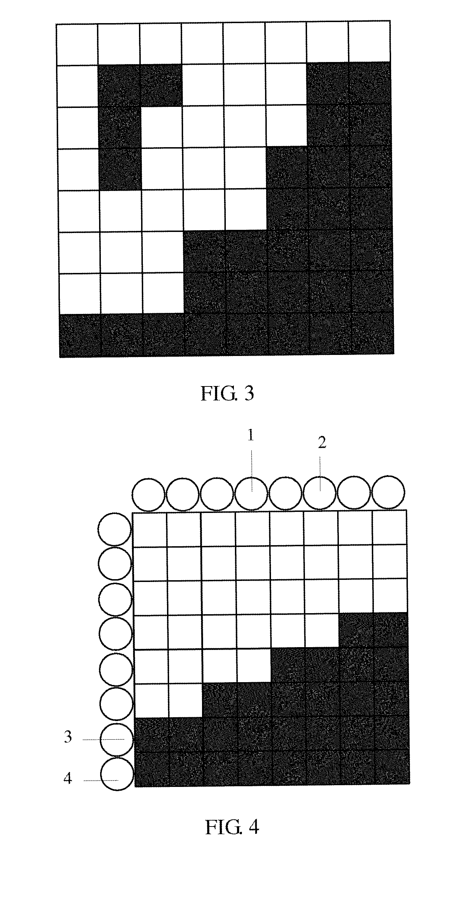

The first partition and the second partition are obtained according to a partitioning manner of the current image block, which specifically includes but is not limited to the following two partitioning manners. A first partitioning manner is: obtaining the first partition and the second partition of the current image block of a depth image by partitioning by using a straight line. That is, the first partition and the second partition of the current image block of the depth image are obtained by partitioning by using a straight line. As shown in FIG. 2, FIG. 2 is a schematic diagram of a current image block obtained by using the first partitioning manner according to the present invention, where a white part is one partition, and a black part is one partition, that is, the first partition and the second partition. It can be seen from FIG. 2 that, characteristics of the two partitions obtained by using the first partitioning manner are: the first partition is spatially connected, and the second partition is also spatially connected. A second partitioning manner is: the current image block of a depth image are partitioned into the first partition and the second partition that are of arbitrary shapes. That is, the first partition and the second partition of the current image block of the depth image is partitioned into arbitrary shapes, where the first partition is spatially connected or spatially disconnected, and the second partition is spatially connected or spatially disconnected. Being spatially disconnected means that a same space may include multiple subspaces, and the subspaces may be disconnected. The second partitioning manner is also referred to as contour partitioning (Contour partitioning). As shown in FIG. 3, FIG. 3 is a schematic diagram of a current image block obtained by using the second partitioning manner according to the present invention, where a white part is one partition, and black parts are one partition, that is, the first partition and the second partition. It can be seen from FIG. 3 that, all partitions of the current image block obtained by using the second partitioning manner may be spatially connected or spatially disconnected. In a coding or decoding process, a partitioning manner of a prediction block is the same as the foregoing partitioning manner of an image block.

After the first partition and the second partition of the current image block are obtained, the prediction value of the first partition and the prediction value of the second partition are acquired from the coded sample points adjacent to the current image block. Specific implementation manners include but are not limited to the following several implementation manners:

A first possible implementation manner is: selecting, according to the partitioning manner of the current image block, at least two sample points from coded sample points in an upper row or a left column adjacent to the current image block, performing an arithmetic operation on numerical values of the at least two sample points, and using an operation result as the prediction value of the first partition or the prediction value of the second partition. As shown in FIG. 4, FIG. 4 is a first schematic diagram of acquiring a prediction value of a first partition or a prediction value of a second partition according to the present invention, where a white partition is the first partition of the current image block, and a black partition is the second partition of the current image block. Two sample points, which are respectively a sample point 1 and a sample point 2, are selected from the coded upper row adjacent to the current image block. An arithmetic operation, for example, an averaging operation or a weighted averaging operation, is performed on a numerical value of the sample point 1 and a numerical value of the sample point 2, and an operation result is used as the prediction value of the first partition. Two sample points, which are respectively a sample point 3 and a sample point 4, are selected from the coded left column adjacent to the current image block. An arithmetic operation, for example, an averaging operation or a weighted averaging operation, is performed on a numerical value of the sample point 3 and a numerical value of the sample point 4, and an operation result is used as the prediction value of the second partition. It should be noted herein that FIG. 4 is merely an example. It is understandable that, according to different partitioning manners, an operation result obtained according to coded sample points in the upper row may also be the prediction value of the second partition, and an operation result obtained according to coded sample points in the left column may also be the prediction value of the first partition, and the present invention is not limited thereto.

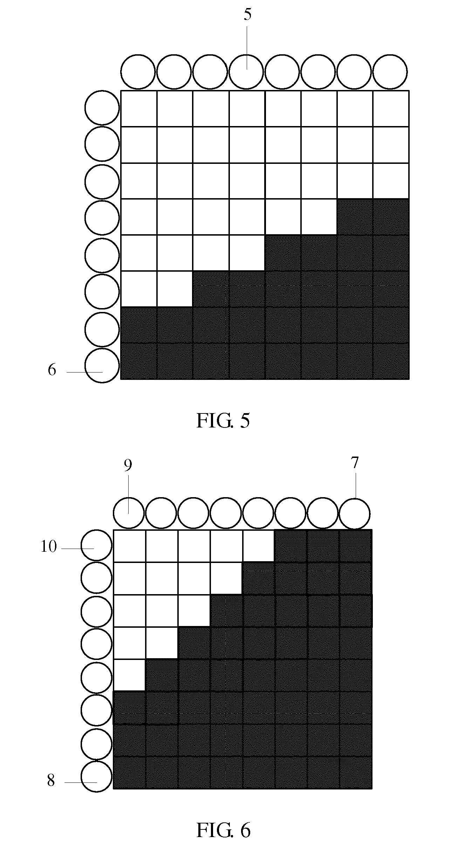

A second possible implementation manner is: selecting, according to the partitioning manner of the current image block, one sample point from coded sample points in an upper row or a left column adjacent to the current image block, and using a numerical value of the sample point as the prediction value of the first partition or the prediction value of the second partition. As shown in FIG. 5, FIG. 5 is a second schematic diagram of acquiring a prediction value of a first partition or a prediction value of a second partition according to the present invention, where a white partition is the first partition of the current image block, and a black partition is the second partition of the current image block. A middle sample point 5 is selected from the coded upper row adjacent to the current image block, and a numerical value of the sample point 5 is used as the prediction value of the first partition. A bottom sample point 6 is selected from the coded left column of the current image block, and a numerical value of the sample point 6 is used as the prediction value of the second partition. It should be noted herein that FIG. 5 is merely an example. It is understandable that, according to different partitioning manners, a numerical value of a sample point selected according to the coded upper row may also be the prediction value of the second partition, a numerical value of a sample point selected according to the coded left column may also be the prediction value of the first partition, and the present invention is not limited thereto.

A third possible implementation manner is: selecting, according to the partitioning manner of the current image block, at least one sample point from a coded upper row adjacent to the current image block and at least one sample point from a coded left column adjacent to the current image block, performing an arithmetic operation on a numerical value of the at least one sample point selected from the upper row and a numerical value of the at least one sample point selected from the left column, and using an operation result as the prediction value of the first partition or the prediction value of the second partition. As shown in FIG. 6, FIG. 6 is a third schematic diagram of acquiring a prediction value of a first partition or a prediction value of a second partition according to the present invention, where a white partition is the first partition of the current image block, and a black partition is the second partition of the current image block. A sample point 7 is selected form the coded upper row of the current image block, two sample points, which are respectively a sample point 8, are selected from the coded left column of the current image block, an arithmetic operation, for example, an averaging operation or a weighted averaging operation is performed on the sample point 7 and the sample point 8, and an operation result is used as the prediction value of the first partition. A sample point 9 is selected from the coded upper row of the current image block, a sample point 10 is selected from the coded left column of the current image block, an arithmetic operation, for example, an averaging operation or a weighted averaging operation is performed on the sample point 9 and the sample point 10, and an operation result is used as the prediction value of the second partition. It should be noted herein that FIG. 6 is merely an example. It is understandable that, whether an operation result of sample points is used as the prediction value of the first partition or the prediction value of the second partition is specifically determined according to different partitioning manners.

A fourth possible implementation manner is: when a sample point in an upper left corner of the current image block and a sample point in an upper right corner do not belong to one partition, setting a condition 1 to true, or otherwise, setting the condition 1 to false; and when the sample point in the upper left corner and a sample point in a lower left corner do not belong to one partition, setting a condition 2 to true, or otherwise, setting the condition 2 to false; when the condition 1 and the condition 2 are both true, setting the prediction value of the second partition to an average value of a numerical value of a sample point in an adjacent row adjacent to the upper right corner of the current image block and a numerical value of a sample point in an adjacent column adjacent to the lower left corner of the current image block; when the condition 1 and the condition 2 are both true or both false, setting the prediction value of the first partition to an average value of a numerical value of a sample point in an adjacent row adjacent to the upper left corner of the current image block and a numerical value of a sample point in an adjacent column adjacent to the upper left corner of the current image block; or otherwise, when the condition 2 is true, the prediction value of the second partition is equal to a numerical value of a sample point in an adjacent column adjacent to the lower left corner of the current image block, and the prediction value of the first partition is equal to a numerical value of a sample point that is in the middle of a row adjacent to the current image block; or otherwise, when the condition 2 is false, the prediction value of the second partition is equal to a numerical value of a sample point in an adjacent row adjacent to the upper right corner of the current image block, and the prediction value of the first partition is equal to a numerical value of a sample point that is in the middle of a column adjacent to the current image block.

The foregoing operation of selecting sample points according to the partitioning manner of the current image block includes selecting sample points in specific positions of the current image block and determining whether the sample points in the specific positions belong to a same partition. The specific positions may be the upper left corner, the upper right corner, and the lower left corner of the current image block, a position in the middle of the first row of the current image block, and a position in the middle of the first column of the current image block.

The prediction value of the first partition and the prediction value of the second prediction may be acquired according to the foregoing method of S101, and then S102 is executed.

S102: Obtain a first residual according to an average value of numerical values of sample points in the first partition and the prediction value of the first partition, and obtain a second residual according to an average value of numerical values of sample points in the second partition and the prediction value of the second partition.

Specifically, the following several implementation manners are included:

A first implementation manner is: acquiring a difference between the average value of the numerical values of the sample points in the first partition and the prediction value of the foregoing first partition, and using the difference between the average value of the numerical values of the sample points in the first partition and the prediction value of the foregoing first partition as the first residual, and acquiring a difference between the average value of the numerical values of the sample points in the second partition and the prediction value of the foregoing second partition, and using the difference between the average value of the numerical values of the sample points in the second partition and the prediction value of the foregoing second partition as the second residual.

A method for calculating the average value of the numerical values of the sample points in the first partition is as follows:

according to a formula:

$$DCorg_0 = \sum Pix_0[x, y] / sumOfPixels$$

where $DCorg_0$ is the average value of the numerical values of the sample points in the first partition, $Pix_0[x, y]$ is a numerical value of a sample point with coordinates [x, y] in the first partition, and $sumOfPixels$ is a quantity of sample points in the partition.

It is understandable that the numerical values of all the sample points in the first partition may be summed, and a sum value is divided by the quantity of all the sample points, and a result is used as the numerical values of the sample points in the first partition; or the sample points in the first partition may be sampled to acquire sampling points, numerical values of all sampling points in the first partition are summed, a sum value is divided by a quantity of the sampling points in the partition, and a result is used as the numerical values of the sample points in the first partition.

Similarly, a method for calculating the average value of the numerical values of the sample points in the second partition is as follows:

according to a formula:

$$DCorg_1 = \sum Pix_1[x, y] / sumOfPixels$$

where $DCorg_1$ is the average value of the numerical values of the sample points in the second partition, $Pix_1[x, y]$ is a numerical value of a sample point with coordinates [x, y] in the second partition, and $sumOfPixels$ is a quantity of sample points in the partition.

It is understandable that the numerical values of all the sample points in the second partition may be summed, and a sum value is divided by the quantity of all the sample points, and a result is used as the numerical values of the sample points in the second partition; or the sample points in the second partition may be sampled to acquire sampling points, numerical values of all sampling points in the second partition are summed, a sum value is divided by a quantity of the sampling points in the partition, and a result is used as the numerical values of the sample points in the second partition.

A second implementation manner is: acquiring a difference between the average value of the numerical values of the sample points in the first partition and the prediction value of the first partition, mapping the difference between the average value of the numerical values of the sample points in the first partition and the prediction value of the foregoing first partition into a first mapping value, and using the foregoing first mapping value as the first residual, and acquiring a difference between the average value of the numerical values of the sample points in the second partition and the prediction value of the second partition, mapping the difference between the average value of the numerical values of the sample points in the second partition and the prediction value of the foregoing second partition into a second mapping value, and using the second mapping value as the second residual.

The second implementation manner and the first implementation manner are different in: in the first implementation manner, the difference between the average value of the numerical values of the sample points in the first partition and the prediction value of the first partition is directly used as the first residual, but in the second implementation manner, the difference between the average value of the numerical values of the sample points in the first partition and the prediction value of the first partition is mapped into the first mapping value, and the first mapping value is used as the first residual; and in the first implementation manner, the difference between the average value of the numerical values of the sample points in the second partition and the prediction value of the second partition is directly used as the second residual, but in the second implementation manner, the difference between the average value of the numerical values of the sample points in the second partition and the prediction value of the second partition is mapped into the second mapping value, and the second mapping value is used as the second residual.

Generally, bits required for representing the first mapping value are fewer than bits required for representing the difference between the average value of the numerical values of the sample points in the first partition and the prediction value of the first partition; and bits required for representing the second mapping value are fewer than bits required for representing the difference between the average value of the numerical values of the sample points in the second partition and the prediction value of the second partition. Therefore, transmission bandwidth can be saved by using the second implementation manner.

A third implementation manner is: acquiring the average value of the numerical values of the sample points in the first partition, mapping the average value of the numerical values of the sample points in the first partition into a third mapping value, and acquiring the average value of the numerical values of the sample points in the second partition, and mapping the average value of the numerical values of the sample points in the second partition into a fourth mapping value; acquiring the prediction value of the first partition, and mapping the prediction value of the first partition into a fifth mapping value, and acquiring the prediction value of the second partition, and mapping the prediction value of the second partition into a sixth mapping value; and acquiring a difference between the third mapping value and the fifth mapping value, and using the difference between the third mapping value and the fifth mapping value as the first residual, and acquiring a difference between the fourth mapping value and the sixth mapping value, and using the difference between the fourth mapping value and the sixth mapping value as the second residual.

That is, in the third implementation manner, a difference between a mapping value of the average value of the numerical values of the sample points in the first partition and a mapping value of the prediction value of the first partition is used as the first residual, and a difference between a mapping value of the average value of the numerical values of the sample points in the second partition and a mapping value of the prediction value of the second partition is used as the second residual. Generally, bits required for representing the third mapping value are fewer than bits required for representing the average value of the numerical values of the sample points in the first partition, bits required for representing the fourth mapping value are fewer than bits required for representing the average value of the numerical values of the sample points in the second partition, bits required for representing the fifth mapping value are fewer than bits required for representing the prediction value of the first partition, and bits required for representing the sixth mapping value are fewer than bits required for representing the prediction value of the second partition. Therefore, transmission bandwidth can be saved by using the third implementation manner.

S103: Code the foregoing first residual and the foregoing second residual.

In the technical solution of this embodiment, a first residual is obtained according to an average value of numerical values of sample points in the first partition and a prediction value of the first partition, and a second residual is obtained according to an average value of numerical values of sample points in the second partition and a prediction value of the second partition; and the foregoing first residual and second residual are coded. Because the prediction value of the first partition and the prediction value of the second partition are acquired from coded sample points adjacent to a current image block, a process of determining the prediction value of the first partition and the prediction value of the second partition from a prediction block is not required. Therefore, a coding or decoding manner of the present invention is simple, and complexity of a coding or decoding system is reduced.

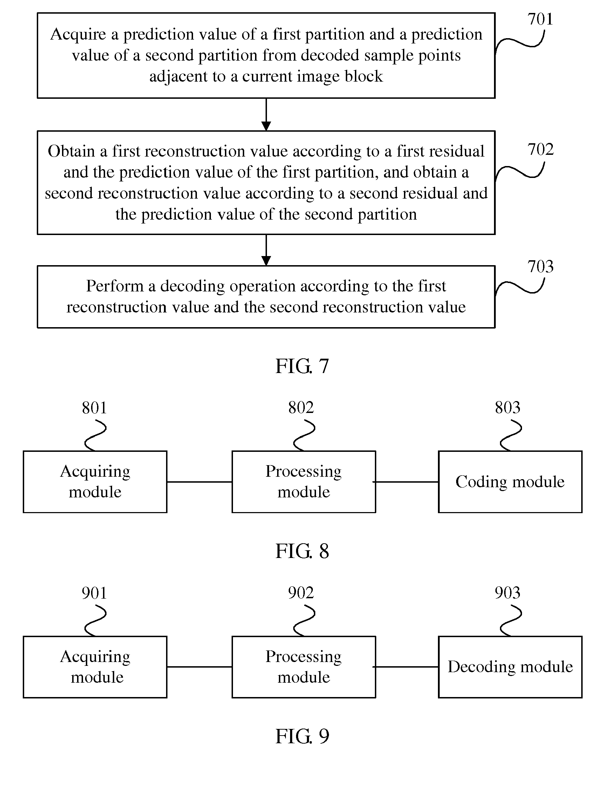

FIG. 7 is a schematic flowchart of Embodiment 1 of a depth image decoding method according to the present invention. As shown in FIG. 7, a method of this embodiment includes:

> S701: Acquire a prediction value of a first partition and a prediction value of a second partition from decoded sample points adjacent to a current image block.

The first partition and the second partition are obtained according to a partitioning manner of the current image block.

This specifically includes but is not limited to two partitioning manners. A first partitioning manner is: the first partition and the second partition of the current image block of a depth image are obtained by partitioning by using a straight line. A second partitioning manner is: the current image block of a depth image are partitioned into the first partition and the second partition that are of arbitrary shapes, where the first partition is spatially connected or spatially disconnected, and the second partition is spatially connected or spatially disconnected.

After the first partition and the second partition of the current image block are obtained, the prediction value of the first partition and the prediction value of the second partition are acquired from the decoded sample points adjacent to the current image block. Specific implementation manners include but are not limited to the following several implementation manners:

A first implementation manner is: selecting, according to the partitioning manner of the current image block, at least two sample points from decoded sample points in an upper row or a left column adjacent to the current image block, performing an arithmetic operation on numerical values of the at least two sample points, and using an operation result as the prediction value of the first partition or the prediction value of the second partition. The arithmetic operation may be averaging or weighted averaging, or another arithmetic operation.

A second implementation manner is: selecting, according to the partitioning manner of the current image block, one sample point from decoded sample points in an upper row or a left column adjacent to the current image block, and using a numerical value of the sample point as the prediction value of the first partition or the prediction value of the second partition.

A third implementation manner is: selecting, according to the partitioning manner of the current image block, at least one sample point from a decoded upper row adjacent to the current image block and at least one sample point from a decoded left column adjacent to the current image block, performing an arithmetic operation on a numerical value of the at least one sample point selected from the upper row and a numerical value of the at least one sample point selected from the left column, and using an operation result as the prediction value of the first partition or the prediction value of the second partition. The arithmetic operation may be averaging or weighted averaging, or another arithmetic operation.

A fourth possible implementation manner is: when a sample point in an upper left corner of the current image block and a sample point in an upper right corner do not belong to one partition, setting a condition 1 to true, or otherwise, setting the condition 1 to false; and when the sample point in the upper left corner and a sample point in a lower left corner do not belong to one partition, setting a condition 2 to true, or otherwise, setting the condition 2 to false; when the condition 1 and the condition 2 are both true, setting the prediction value of the second partition to an average value of a numerical value of a sample point in an adjacent row adjacent to the upper right corner of the current image block and a numerical value of a sample point in an adjacent column adjacent to the lower left corner of the current image block; when the condition 1 and the condition 2 are both true or both false, setting the prediction value of the first partition to an average value of a numerical value of a sample point in an adjacent row adjacent to the upper left corner of the current image block and a numerical value of a sample point in an adjacent column adjacent to the upper left corner of the current image block; or otherwise, when the condition 2 is true, the prediction value of the second partition is equal to a value of a sample point in an adjacent column adjacent to the lower left corner of the current image block, and the prediction value of the first partition is equal to a numerical value of a sample point that is in the middle of a row adjacent to the current image block; or otherwise, when the condition 2 is false, the prediction value of the second partition is equal to a numerical value of a sample point in an adjacent row adjacent to the upper left corner of the current image block, and the prediction value of the first partition is equal to a numerical value of a sample point that is in the middle of a column adjacent to the current image block.

The foregoing operation of selecting sample points according to the partitioning manner of the current image block includes selecting sample points in specific positions of the current image block and determining whether the sample points in the specific positions belong to a same partition. The specific positions may be the upper left corner, the upper right corner, and the lower left corner of the current image block, a position in the middle of the first row of the current image block, and a position in the middle of the first column of the current image block.

This step and S101 are different in: in S101, the prediction value of the first partition and the prediction value of the second partition are acquired from the coded sample points, and in S701, the prediction value of the first partition and the prediction value of the second partition are acquired from the decoded sample points. An acquiring method and a principle thereof are the same. Therefore, details are not described herein again, and reference may be made to S701.

The prediction value of the first partition and the prediction value of the second prediction may be acquired according to the foregoing method of S701, and then S702 is executed.

S702: Obtain a first reconstruction value according to a first residual and the prediction value of the first partition, and obtain a second reconstruction value according to a second residual and the prediction value of the second partition.

The first residual and the second residual are acquired from a received data rate.

The obtaining a first reconstruction value according to a first residual and the prediction value of the first partition, and obtaining a second reconstruction value according to a second residual and the prediction value of the second partition includes but is not limited to the following several implementation manners:

A first implementation manner is: when a first residual coded by an encoder side is a difference between an average value of numerical values of sample points in the first partition and the prediction value of the first partition, and a second residual coded by the encoder side is a difference between an average value of numerical values of sample points in the second partition and the prediction value of the second partition, acquiring, by a decoder side, the first residual, and using a sum value of the first residual and the prediction value of the first partition as the first reconstruction value, and acquiring the second residual, and using a sum value of the second residual and the prediction value of the second partition as the second reconstruction value.

The second implementation manner is: when a first residual coded by an encoder side is a mapping value (a first mapping value) of a difference between an average value of numerical values of sample points in the first partition and the prediction value of the first partition, and a second residual coded by the encoder side is a mapping value (a second mapping value) of a difference between an average value of numerical values of sample points in the second partition and the prediction value of the second partition, acquiring, by a decoder side, the first residual, and mapping the first residual into a seventh mapping value, and acquiring the second residual, and mapping the second residual into an eighth mapping value; and acquiring a sum value of the prediction value of the first partition and the seventh mapping value as the first reconstruction value, and acquiring a sum value of the prediction value of the second partition and the eighth mapping value as the second reconstruction value. A magnitude of the seventh mapping value is the difference between the average value of the numerical values of the sample points in the first partition on the encoder side and the prediction value of the first partition, and a magnitude of the eighth mapping value is the difference between the average value of the numerical values of the sample points in the second partition on the encoder side and the prediction value of the second partition, bits required for representing the seventh mapping value are greater than bits required for representing the first residual, and bits required for representing the eighth mapping value are greater than bits required for representing the second residual.

A third implementation manner is: when a first residual coded by an encoder side is a difference between a mapping value (a third mapping value) of an average value of numerical values of sample points in the first partition and a mapping value (a fifth mapping value) of the prediction value of the first partition; and a second residual coded by the encoder side is a difference between a mapping value (a fourth mapping value) of an average value of numerical values of sample points in the second partition and a mapping value (a sixth mapping value) of the prediction value of the second partition, acquiring, by a decoder side, the prediction value of the first partition, and mapping the prediction value of the first partition into a ninth mapping value, and acquiring the prediction value of the second partition, and mapping the prediction value of the second partition into a tenth mapping value, where bits required for representing the ninth mapping value and the tenth mapping value are usually fewer than bits for representing the prediction value of the first partition and the prediction value of the second partition; and acquiring a sum value of the ninth mapping value and the first residual, mapping the sum value into an eleventh mapping value, and using the eleventh mapping value as the first reconstruction value, and acquiring a sum value of the tenth mapping value and the second residual, mapping the sum value into a twelfth mapping value, and using the twelfth mapping value as the second reconstruction value, where bits required for representing the eleventh mapping value and the twelfth mapping value are usually greater than bits required for representing the ninth mapping value and the tenth mapping value. A magnitude of the ninth mapping value is the same as a magnitude of the fifth mapping value on the encoder side, a magnitude of the tenth mapping value is the same as a magnitude of the sixth mapping value on the encoder side, a magnitude of the eleventh mapping value is the average value of the numerical values of the sample points in the first partition on the encoder side, and a magnitude of the twelfth mapping value is the average value of the numerical values of the sample points in the second partition on the encoder side.

S703: Perform a decoding operation according to the first reconstruction value and the second reconstruction value.

The numerical values of the sample points in the first partition are acquired according to the foregoing first reconstruction value, and the numerical values of the sample points in the second partition are acquired according to the foregoing second reconstruction value.

The foregoing first reconstruction value is used as the numerical values of the sample points in the first partition, and the foregoing second reconstruction value is used as the numerical values of the sample points in the second partition.

In addition, the first reconstruction value and the second reconstruction value respectively represent the average value of the numerical values of the sample points in the first partition and the average value of the numerical values of the sample points in the second partition. In order to obtain more accurate numerical values of the sample points in the first partition and more accurate numerical values of the sample points in the second partition of the current image block, a difference between the first reconstruction value and the prediction value of the first partition is added to numerical values of sample points in a first partition corresponding to a prediction block, to obtain the numerical values of the sample points in the first partition corresponding to an image block of the first partition; and a difference between the second reconstruction value and the prediction value of the second partition is added to numerical values of sample points in a second partition corresponding to the prediction block, to obtain the numerical values of the sample points in the second partition corresponding to an image block of the second partition.

In the technical solution of this embodiment, a first reconstruction value is obtained according to a first residual and a prediction value of the first partition, and a second reconstruction value is obtained according to a second residual and a prediction value of the second partition; and a decoding operation is performed according to the first reconstruction value and the second reconstruction value. Because the prediction value of the first partition and the prediction value of the second partition are acquired from decoded sample points adjacent to a current image block, a process of determining the prediction value of the first partition and the prediction value of the second partition from a prediction block is not required. Therefore, a coding or decoding manner of the present invention is simple, and complexity of a coding or decoding system is reduced.

FIG. 8 is a schematic structural diagram of Embodiment 1 of a depth image coding apparatus according to the present invention. As shown in FIG. 8, the apparatus of this embodiment includes an acquiring module 801, a processing module 802, and a coding module 803. The acquiring module 801 is configured to acquire a prediction value of the first partition and a prediction value of the second partition from coded sample points adjacent to the current image block, where the first partition and the second partition are obtained according to a partitioning manner of the current image block. The processing module 802 is configured to obtain a first residual according to an average value of numerical values of sample points in the first partition and the prediction value of the first partition, and obtain a second residual according to an average value of numerical values of sample points in the second partition and the prediction value of the second partition. The coding module 803 is configured to code the first residual and the second residual.

In the foregoing embodiment, the acquiring module 801 is specifically configured to select, according to the partitioning manner of the current image block, at least two sample points from coded sample points in an upper row or a left column adjacent to the current image block, perform an arithmetic operation on numerical values of the at least two sample points, and use an operation result as the prediction value of the first partition or the prediction value of the second partition; or select, according to the partitioning manner of the current image block, one sample point from coded sample points in an upper row or a left column adjacent to the current image block, and use a numerical value of the sample point as the prediction value of the first partition or the prediction value of the second partition; or select, according to the partitioning manner of the current image block, at least one sample point from a coded upper row adjacent to the current image block and at least one sample point from a coded left column adjacent to the current image block, perform an arithmetic operation on a numerical value of the at least one sample point selected from the upper row and a numerical value of the at least one sample point selected from the left column, and use an operation result as the prediction value of the first partition or the prediction value of the second partition.

In the foregoing embodiment, the acquiring module 801 is specifically configured to perform an averaging operation on the numerical values of the at least two sample points; or perform weighted averaging on the numerical values of the at least two sample points.

In the foregoing embodiment, the acquiring module 801 is specifically configured to: the first partition and the second partition of the current image block of a depth image are obtained by partitioning by using a straight line; or the first partition and the second partition of the current image block of a depth image are partitioned into arbitrary shapes, where the first partition is spatially connected or spatially disconnected, and the second partition is spatially connected or spatially disconnected.

In the foregoing embodiment, the processing module 802 is specifically configured to acquire a difference between the average value of the numerical values of the sample points in the first partition and the prediction value of the first partition, and use the difference between the average value of the numerical values of the sample points in the first partition and the prediction value of the first partition as the first residual, and acquire a difference between the average value of the numerical values of the sample points in the second partition and the prediction value of the second partition, and use the difference between the average value of the numerical values of the sample points in the second partition and the prediction value of the second partition as the second residual.

In the foregoing embodiment, the processing module 802 is specifically configured to acquire a difference between the average value of the numerical values of the sample points in the first partition and the prediction value of the first partition, map the difference between the average value of the numerical values of the sample points in the first partition and the prediction value of the first partition into a first mapping value, and use the first mapping value as the first residual, and acquire a difference between the average value of the numerical values of the sample points in the second partition and the prediction value of the second partition, map the difference between the average value of the numerical values of the sample points in the second partition into a second mapping value, and use the first mapping value as the second residual.

In the foregoing embodiment, the processing module 802 is specifically configured to acquire the average value of the numerical values of the sample points in the first partition, map the average value of the numerical values of the sample points in the first partition into a third mapping value, and acquire the average value of the numerical values of the sample points in the second partition, and map the average value of the numerical values of the sample points in the second partition into a fourth mapping value; acquire the prediction value of the first partition, and map the prediction value of the first partition into a fifth mapping value, and acquire the prediction value of the second partition, and map the prediction value of the second partition into a sixth mapping value; and acquire a difference between the third mapping value and the fifth mapping value, and use the difference between the third mapping value and the fifth mapping value as the first residual, and acquire a difference between the fourth mapping value and the sixth mapping value, and use the difference between the fourth mapping value and the sixth mapping value as the second residual.

The apparatus of this embodiment may be correspondingly configured to execute the technical solution of the method embodiment shown in FIG. 1, an implementation principle and a technical effect thereof are similar, and details are not described herein again.

FIG. 9 is a schematic structural diagram of Embodiment 1 of a depth image decoding apparatus according to the present invention. As shown in FIG. 9, the apparatus of this embodiment includes an acquiring module 901, a processing module 902, and a decoding module 903. The acquiring module 901 is configured to acquire a prediction value of the first partition and a prediction value of the second partition from decoded sample points adjacent to the current image block, where the first partition and the second partition are obtained according to a partitioning manner of the current image block. The processing module 902 is configured to obtain a first reconstruction value according to a first residual and the prediction value of the first partition, and obtain a second reconstruction value according to a second residual and the prediction value of the second partition. The decoding module 903 is configured to perform a decoding operation according to the first reconstruction value and the second reconstruction value.

In the foregoing embodiment, the acquiring module 901 is specifically configured to select, according to the partitioning manner of the current image block, at least two sample points from decoded sample points in an upper row or a left column adjacent to the current image block, perform an arithmetic operation on numerical values of the at least two sample points, and use an operation result as the prediction value of the first partition or the prediction value of the second partition; or select, according to the partitioning manner of the current image block, one sample point from decoded sample points in an upper row or a left column adjacent to the current image block, and use a numerical value of the sample point as the prediction value of the first partition or the prediction value of the second partition; or select, according to the partitioning manner of the current image block, at least one sample point from a decoded upper row adjacent to the current image block and at least one sample point from a decoded left column adjacent to the current image block, perform an arithmetic operation on a numerical value of the at least one sample point selected from the upper row and a numerical value of the at least one sample point selected from the left column, and use an operation result as the prediction value of the first partition or the prediction value of the second partition.

In the foregoing embodiment, the acquiring module 901 is specifically configured to perform an averaging operation on the numerical values of the at least two sample points; or perform weighted averaging on the numerical values of the at least two sample points.

In the foregoing embodiment, the acquiring module 901 is specifically configured to: the first partition and the second partition of the current image block of a depth image are obtained by partitioning by using a straight line; or the first partition and the second partition of the current image block of a depth image are partitioned into arbitrary shapes, where the first partition is spatially connected or spatially disconnected, and the second partition is spatially connected or spatially disconnected.

In the foregoing embodiment, the processing module 902 is specifically configured to acquire the first residual, and use a sum value of the first residual and the prediction value of the first partition as the first reconstruction value, and acquire the second residual, and use a sum value of the second residual and the prediction value of the second partition as the second reconstruction value.

In the foregoing embodiment, the processing module 902 is specifically configured to acquire the first residual, and map the first residual into a seventh mapping value, and acquire the second residual, and map the second residual into an eighth mapping value; and acquire a sum value of the prediction value of the first partition and the seventh mapping value as the first reconstruction value, and acquire a sum value of the prediction value of the second partition and the eighth mapping value as the second reconstruction value.

In the foregoing embodiment, the processing module 902 is specifically configured to acquire the prediction value of the first partition, and map the prediction value of the first partition into a ninth mapping value, and acquire the prediction value of the second partition, and map the prediction value of the second partition into a tenth mapping value; and acquire a sum value of the ninth mapping value and the first residual, map the sum value into an eleventh mapping value, and use the eleventh mapping value as the first reconstruction value, and acquire a sum value of the tenth mapping value and the second residual, map the sum value into a twelfth mapping value, and use the twelfth mapping value as the second reconstruction value.

The apparatus of this embodiment may be correspondingly configured to execute the technical solution of the method embodiment shown in FIG. 7, an implementation principle and a technical effect thereof are similar, and details are not described herein again.

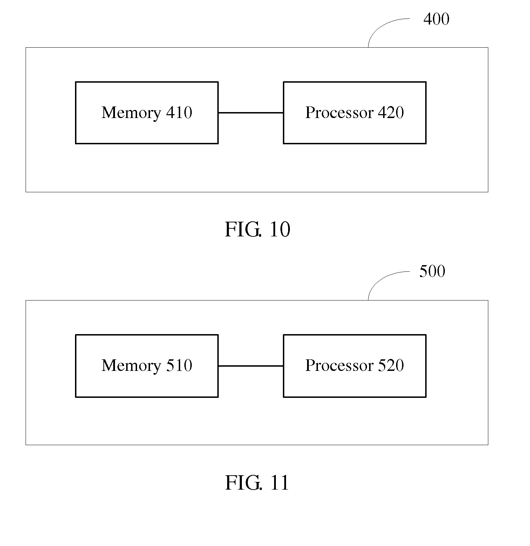

FIG. 10 is a schematic block diagram of a depth image coding device according to another embodiment of the present invention. An example of a device 400 of FIG. 10 is a coder. The device 400 includes a memory 410 and a processor 420. The memory 410 may include a random access memory, a flash memory, a read-only memory, a programmable read-only memory, a non-volatile memory, a register, or the like. The processor 420 may be a central processing unit (Central Processing Unit, CPU). The memory 410 is configured to store an executable instruction. The processor 420 may execute the executable instruction stored in the memory 410. For example, the processor 420 is configured to acquire a prediction value of the first partition and a prediction value of the second partition from coded sample points adjacent to the current image block, where the first partition and the second partition are obtained according to a partitioning manner of the current image block; obtain a first residual according to an average value of numerical values of sample points in the first partition and the prediction value of the first partition, and obtain a second residual according to an average value of numerical values of sample points in the second partition and the prediction value of the second partition; and code the first residual and the second residual.

Optionally, in an embodiment, the processor 420 may be configured to select, according to the partitioning manner of the current image block, at least two sample points from coded sample points in an upper row or a left column adjacent to the current image block, perform an arithmetic operation on numerical values of the at least two sample points, and use an operation result as the prediction value of the first partition or the prediction value of the second partition; or select, according to the partitioning manner of the current image block, one sample point from coded sample points in an upper row or a left column adjacent to the current image block, and use a numerical value of the sample point as the prediction value of the first partition or the prediction value of the second partition; or select, according to the partitioning manner of the current image block, at least one sample point from a coded upper row adjacent to the current image block and at least one sample point from a coded left column adjacent to the current image block, perform an arithmetic operation on a numerical value of the at least one sample point selected from the upper row and a numerical value of the at least one sample point selected from the left column, and use an operation result as the prediction value of the first partition or the prediction value of the second partition.

Optionally, in another embodiment, the processor 420 may be configured to acquire a difference between the average value of the numerical values of the sample points in the first partition and the prediction value of the first partition, and use the difference between the average value of the numerical values of the sample points in the first partition and the prediction value of the first partition as the first residual, and acquire a difference between the average value of the numerical values of the sample points in the second partition and the prediction value of the second partition, and use the difference between the average value of the numerical values of the sample points in the second partition and the prediction value of the second partition as the second residual.

Optionally, in another embodiment, the processor 420 may be configured to acquire a difference between the average value of the numerical values of the sample points in the first partition and the prediction value of the first partition, map the difference between the average value of the numerical values of the sample points in the first partition and the prediction value of the first partition into a first mapping value, and use the first mapping value as the first residual, and acquire a difference between the average value of the numerical values of the sample points in the second partition and the prediction value of the second partition, map the difference between the average value of the numerical values of the sample points in the second partition and the prediction value of the second partition into a second mapping value, and use the first mapping value as the second residual.

Optionally, in another embodiment, the processor 420 may be configured to acquire the average value of the numerical values of the sample points in the first partition, map the average value of the numerical values of the sample points in the first partition into a third mapping value, and acquire the average value of the numerical values of the sample points in the second partition, and map the average value of the numerical values of the sample points in the second partition into a fourth mapping value; acquire the prediction value of the first partition, and map the prediction value of the first partition into a fifth mapping value, and acquire the prediction value of the second partition, and map the prediction value of the second partition into a sixth mapping value; and acquire a difference between the third mapping value and the fifth mapping value, and use the difference between the third mapping value and the fifth mapping value as the first residual, and acquire a difference between the fourth mapping value and the sixth mapping value, and use the difference between the fourth mapping value and the sixth mapping value as the second residual.

Reference may be made to the foregoing process of the method embodiment of FIG. 1 for other functions and operations of the device 400 of FIG. 10. To avoid repetition, details are not described herein again.

FIG. 11 is a schematic block diagram of a depth image decoding device according to another embodiment of the present invention. An example of a device 500 of FIG. 11 is a decoder. The device 500 includes a memory 510 and a processor 520. The memory 510 may include a random access memory, a flash memory, a read-only memory, a programmable read-only memory, a non-volatile memory, a register, or the like. The processor 520 may be a central processing unit (Central Processing Unit, CPU). The memory 510 is configured to store an executable instruction. The processor 520 may execute the executable instruction stored in the memory 510. For example, the processor 520 acquires a prediction value of the first partition and a prediction value of the second partition from decoded sample points adjacent to the current image block, where the first partition and the second partition are obtained according to a partitioning manner of the current image block; obtains a first reconstruction value according to a first residual and the prediction value of the first partition, and obtains a second reconstruction value according to a second residual and the prediction value of the second partition; and performs a decoding operation according to the first reconstruction value and the second reconstruction value.

Optionally, in an embodiment, the processor 520 may be configured to select, according to the partitioning manner of the current image block, at least two sample points from decoded sample points in an upper row or a left column adjacent to the current image block, perform an arithmetic operation on numerical values of the at least two sample points, and use an operation result as the prediction value of the first partition or the prediction value of the second partition; or select, according to the partitioning manner of the current image block, one sample point from decoded sample points in an upper row or a left column adjacent to the current image block, and use a numerical value of the sample point as the prediction value of the first partition or the prediction value of the second partition; or select, according to the partitioning manner of the current image block, at least one sample point from a decoded upper row adjacent to the current image block and at least one sample point from a decoded left column adjacent to the current image block, perform an arithmetic operation on a numerical value of the at least one sample point selected from the upper row and a numerical value of the at least one sample point selected from the left column, and use an operation result as the prediction value of the first partition or the prediction value of the second partition.

Optionally, in another embodiment, the processor 520 may be configured to acquire the first residual, and use a sum value of the first residual and the prediction value of the first partition as the first reconstruction value, and acquire the second residual, and use a sum value of the second residual and the prediction value of the second partition as the second reconstruction value.

Optionally, in another embodiment, the processor 520 may be configured to acquire the first residual, and map the first residual into a seventh mapping value, and acquire the second residual, and map the second residual into an eighth mapping value; and acquire a sum value of the prediction value of the first partition and the seventh mapping value as the first reconstruction value, and acquire a sum value of the prediction value of the second partition and the eighth mapping value as the second reconstruction value.

Optionally, in another embodiment, the processor 520 may be configured to acquire the prediction value of the first partition, and map the prediction value of the first partition into a ninth mapping value, and acquire the prediction value of the second partition, and map the prediction value of the second partition into a tenth mapping value; and acquire a sum value of the ninth mapping value and the first residual, map the sum value into an eleventh mapping value, and use the eleventh mapping value as the first reconstruction value, and acquire a sum value of the tenth mapping value and the second residual, map the sum value into a twelfth mapping value, and use the twelfth mapping value as the second reconstruction value.

Reference may be made to the foregoing process of the method embodiment of FIG. 7 for other functions and operations of the device 500 of FIG. 11. To avoid repetition, details are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. A depth image coding method, comprising:

    acquiring a prediction value of the first partition and a prediction value of the second partition from coded sample points adjacent to the current image block, wherein the first partition and the second partition are obtained according to a partitioning manner of the current image block; obtaining a first residual according to an average value of numerical values of sample points in the first partition and the prediction value of the first partition, and obtaining a second residual according to an average value of numerical values of sample points in the second partition and the prediction value of the second partition; and coding the first residual and the second residual.

2. The method according to claim 1, wherein the acquiring a prediction value of the first partition and a prediction value of the second partition from coded sample points adjacent to the current image block comprises:

    selecting, according to the partitioning manner of the current image block, at least two sample points from coded sample points in an upper row or a left column adjacent to the current image block, performing an arithmetic operation on numerical values of the at least two sample points, and using a result of the operation as the prediction value of the first partition or the prediction value of the second partition; or selecting, according to the partitioning manner of the current image block, one sample point from coded sample points in an upper row or a left column adjacent to the current image block, and using a numerical value of the sample point as the prediction value of the first partition or the prediction value of the second partition; or selecting, according to the partitioning manner of the current image block, at least one sample point from a coded upper row adjacent to the current image block and at least one sample point from a coded left column adjacent to the current image block, performing an arithmetic operation on a numerical value of the at least one sample point selected from the upper row and a numerical value of the at least one sample point selected from the left column, and using a result of the operation as the prediction value of the first partition or the prediction value of the second partition.

3. The method according to claim 2, wherein the performing an arithmetic operation on numerical values of the at least two sample points comprises:

    performing an averaging operation on the numerical values of the at least two sample points; or performing weighted averaging on the numerical values of the at least two sample points.

4. The method according to claim 1, wherein that the first partition and the second partition are obtained according to a partitioning manner of the current image block comprises:

    the first partition and the second partition of the current image block of a depth image are obtained by partitioning by using a straight line; or the first partition and the second partition of the current image block of a depth image are partitioned into arbitrary shapes, wherein the first partition is spatially connected or spatially disconnected, and the second partition is spatially connected or spatially disconnected.

5. The method according to any one of claims 1 to 4, wherein the obtaining a first residual according to an average value of numerical values of sample points in the first partition and the prediction value of the first partition, and obtaining a second residual according to an average value of numerical values of sample points in the second partition and the prediction value of the second partition comprises:

    acquiring a difference between the average value of the numerical values of the sample points in the first partition and the prediction value of the first partition, and using the difference between the average value of the numerical values of the sample points in the first partition and the prediction value of the first partition as the first residual, and acquiring a difference between the average value of the numerical values of the sample points in the second partition and the prediction value of the second partition, and using the difference between the average value of the numerical values of the sample points in the second partition and the prediction value of the second partition as the second residual.

6. The method according to any one of claims 1 to 4, wherein the obtaining a first residual according to an average value of numerical values of sample points in the first partition and the prediction value of the first partition, and obtaining a second residual according to an average value of numerical values of sample points in the second partition and the prediction value of the second partition comprises:

acquiring a difference between the average value of the numerical values of the sample points in the first partition and the prediction value of the first partition, mapping the difference between the average value of the numerical values of the sample points in the first partition and the prediction value of the first partition into a first mapping value, and using the first mapping value as the first residual, and acquiring a difference between the average value of the numerical values of the sample points in the second partition and the prediction value of the second partition, mapping the difference between the average value of the numerical values of the sample points in the second partition and the prediction value of the second partition into a second mapping value, and using the first mapping value as the second residual.

7. The method according to any one of claims 1 to 4, wherein the obtaining a first residual according to an average value of numerical values of sample points in the first partition and the prediction value of the first partition, and obtaining a second residual according to an average value of numerical values of sample points in the second partition and the prediction value of the second partition comprises:

acquiring the average value of the numerical values of the sample points in the first partition, mapping the average value of the numerical values of the sample points in the first partition into a third mapping value, and acquiring the average value of the numerical values of the sample points in the second partition, and mapping the average value of the numerical values of the sample points in the second partition into a fourth mapping value; acquiring the prediction value of the first partition, and mapping the prediction value of the first partition into a fifth mapping value, and acquiring the prediction value of the second partition, and mapping the prediction value of the second partition into a sixth mapping value; and acquiring a difference between the third mapping value and the fifth mapping value, and using the difference between the third mapping value and the fifth mapping value as the first residual, and acquiring a difference between the fourth mapping value and the sixth mapping value, and using the difference between the fourth mapping value and the sixth mapping value as the second residual.

8. A depth image decoding method, comprising:

acquiring a prediction value of the first partition and a prediction value of the second partition from decoded sample points adjacent to the current image block, wherein the first partition and the second partition are obtained according to a partitioning manner of the current image block; obtaining a first reconstruction value according to a first residual and the prediction value of the first partition, and obtaining a second reconstruction value according to a second residual and the prediction value of the second partition; and performing a decoding operation according to the first reconstruction value and the second reconstruction value.

9. The method according to claim 8, wherein the acquiring a prediction value of the first partition and a prediction value of the second partition from decoded sample points adjacent to the current image block comprises:

selecting, according to the partitioning manner of the current image block, at least two sample points from decoded sample points in an upper row or a left column adjacent to the current image block, performing an arithmetic operation on numerical values of the at least two sample points, and using a result of the operation as the prediction value of the first partition or the prediction value of the second partition; or selecting, according to the partitioning manner of the current image block, one sample point from decoded sample points in an upper row or a left column adjacent to the current image block, and using a numerical value of the sample point as the prediction value of the first partition or the prediction value of the second partition; or selecting, according to the partitioning manner of the current image block, at least one sample point from a decoded upper row adjacent to the current image block and at least one sample point from a decoded left column adjacent to the current image block, performing an arithmetic operation on a numerical value of the at least one sample point selected from the upper row and a numerical value of the at least one sample point selected from the left column, and using a result of the operation as the prediction value of the first partition or the prediction value of the second partition.

10. The method according to claim 9, wherein the performing an arithmetic operation on numerical values of the at least two sample points comprises:

performing an averaging operation on the numerical values of the at least two sample points; or

performing weighted averaging on the numerical values of the at least two sample points.

11. The method according to claim 8, wherein that the first partition and the second partition are obtained according to a partitioning manner of the current image block comprises:

the first partition and the second partition of the current image block of a depth image are obtained by partitioning by using a straight line; or the first partition and the second partition of the current image block of a depth image are partitioned into arbitrary shapes, wherein the first partition is spatially connected or spatially disconnected, and the second partition is spatially connected or spatially disconnected.

12. The method according to any one of claims 8 to 11, wherein the obtaining a first reconstruction value according to a first residual and the prediction value of the first partition, and obtaining a second reconstruction value according to a second residual and the prediction value of the second partition comprises:

acquiring the first residual, and using a sum value of the first residual and the prediction value of the first partition as the first reconstruction value, and acquiring the second residual, and using a sum value of the second residual and the prediction value of the second partition as the second reconstruction value.

13. The method according to any one of claims 8 to 11, wherein the obtaining a first reconstruction value according to a first residual and the prediction value of the first partition, and obtaining a second reconstruction value according to a second residual and the prediction value of the second partition comprises:

acquiring the first residual, and mapping the first residual into a seventh mapping value, and acquiring the second residual, and mapping the second residual into an eighth mapping value; and acquiring a sum value of the prediction value of the first partition and the seventh mapping value as the first reconstruction value, and acquiring a sum value of the prediction value of the second partition and the eighth mapping value as the second reconstruction value.

14. The method according to any one of claims 8 to 11, wherein the obtaining a first reconstruction value according to a first residual and the prediction value of the first partition, and obtaining a second reconstruction value according to a second residual and the prediction value of the second partition comprises:

acquiring the prediction value of the first partition, and mapping the prediction value of the first partition into a ninth mapping value, and acquiring the prediction value of the second partition, and mapping the prediction value of the second partition into a tenth mapping value; and acquiring a sum value of the ninth mapping value and the first residual, mapping the sum value into an eleventh mapping value, and using the eleventh mapping value as the first reconstruction value, and acquiring a sum value of the tenth mapping value and the second residual, mapping the sum value into a twelfth mapping value, and using the twelfth mapping value as the second reconstruction value.

15. A depth image coding apparatus, comprising:

an acquiring module, configured to acquire a prediction value of the first partition and a prediction value of the second partition from coded sample points adjacent to the current image block, wherein the first partition and the second partition are obtained according to a partitioning manner of the current image block; a processing module, configured to obtain a first residual according to an average value of numerical values of sample points in the first partition and the prediction value of the first partition, and obtain a second residual according to an average value of numerical values of sample points in the second partition and the prediction value of the second partition; and a coding module, configured to code the first residual and the second residual.

16. The apparatus according to claim 15, wherein the acquiring module is specifically configured to select, according to the partitioning manner of the current image block, at least two sample points from coded sample points in an upper row or a left column adjacent to the current image block, perform an arithmetic operation on numerical values of the at least two sample points, and use a result of the operation as the prediction value of the first partition or the prediction value of the second partition; or select, according to the partitioning manner of the current image block, one sample point from coded sample points in an upper row or a left column adjacent to the current image block, and use a numerical value of the sample point as the prediction value of the first partition or the prediction value of the second partition; or select, according to the partitioning manner of the current image block, at least one sample point from a coded upper row adjacent to the current image block and at least one sample point from a coded left column adjacent to the current image block, perform an arithmetic operation on a numerical value of the at least one sample point selected from the upper row and a numerical value of the at least one sample point selected from the left column, and use a result of the operation as the prediction value of the first partition or the prediction value of the second partition.

17. The apparatus according to claim 16, wherein the acquiring module is specifically configured to perform an averaging operation on the numerical values of the at least two sample points; or perform weighted averaging on the numerical values of the at least two sample points.

18. The apparatus according to claim 15, wherein the acquiring module is specifically configured to: the first partition and the second partition of the current image block of a depth image obtained by partitioning by using a straight line; or the first partition and the second partition of the current image block of a depth image are partitioned into arbitrary shapes, wherein the first partition is spatially connected or spatially disconnected, and the second partition is spatially connected or spatially disconnected.

19. The apparatus according to any one of claims 15 to 18, wherein the processing module is specifically configured to acquire a difference between the average value of the numerical values of the sample points in the first partition and the prediction value of the first partition, and use the difference between the average value of the numerical values of the sample points in the first partition and the prediction value of the first partition as the first residual, and acquire a difference between the average value of the numerical values of the sample points in the second partition and the prediction value of the second partition, and use the difference between the average value of the numerical values of the sample points in the second partition and the prediction value of the second partition as the second residual.

20. The apparatus according to any one of claims 15 to 18, wherein the processing module is specifically configured to acquire a difference between the average value of the numerical values of the sample points in the first partition and the prediction value of the first partition, map the difference between the average value of the numerical values of the sample points in the first partition and the prediction value of the first partition into a first mapping value, and use the first mapping value as the first residual, and acquire a difference between the average value of the numerical values of the sample points in the second partition and the prediction value of the second partition, map the difference between the average value of the numerical values of the sample points in the second partition and the prediction value of the second partition into a second mapping value, and use the first mapping value as the second residual.

21. The apparatus according to any one of claims 15 to 18, wherein the processing module is specifically configured to acquire the average value of the numerical values of the sample points in the first partition, map the average value of the numerical values of the sample points in the first partition into a third mapping value, and acquire the average value of the numerical values of the sample points in the second partition, and map the average value of the numerical values of the sample points in the second partition into a fourth mapping value; acquire the prediction value of the first partition, and map the prediction value of the first partition into a fifth mapping value, and acquire the prediction value of the second partition, and map the prediction value of the second partition into a sixth mapping value; and acquire a difference between the third mapping value and the fifth mapping value, and use the difference between the third mapping value and the fifth mapping value as the first residual, and acquire a difference between the fourth mapping value and the sixth mapping value, and use the difference between the fourth mapping value and the sixth mapping value as the second residual.

22. A depth image decoding apparatus, comprising:

an acquiring module, configured to acquire a prediction value of the first partition and a prediction value of the second partition from decoded sample points adjacent to the current image block, wherein the first partition and the second partition are obtained according to a partitioning manner of the current image block;
a processing module, configured to obtain a first reconstruction value according to a first residual and the prediction value of the first partition, and obtain a second reconstruction value according to a second residual and the prediction value of the second partition; and
a decoding module, configured to perform a decoding operation according to the first reconstruction value and the second reconstruction value.

23. The apparatus according to claim 22, wherein the acquiring module is specifically configured to select, according to the partitioning manner of the current image block, at least two sample points from decoded sample points in an upper row or a left column adjacent to the current image block, perform an arithmetic operation on numerical values of the at least two sample points, and use a result of the operation as the prediction value of the first partition or the prediction value of the second partition; or select, according to the partitioning manner of the current image block, one sample point from decoded sample points in an upper row or a left column adjacent to the current image block, and use a numerical value of the sample point as the prediction value of the first partition or the prediction value of the second partition; or select, according to the partitioning manner of the current image block, at least one sample point from a decoded upper row adjacent to the current image block and at least one sample point from a decoded left column adjacent to the current image block, perform an arithmetic operation on a numerical value of the at least one sample point selected from the upper row and a numerical value of the at least one sample point selected from the left column, and use a result of the operation as the prediction value of the first partition or the prediction value of the second partition.

24. The apparatus according to claim 23, wherein the acquiring module is specifically configured to perform an averaging operation on the numerical values of the at least two sample points; or perform weighted averaging on the numerical values of the at least two sample points.

25. The apparatus according to claim 22, wherein the acquiring module is specifically configured to: the first partition and the second partition of the current image block of a depth image are obtained by partitioning by using a straight line; or the first partition and the second partition of the current image block of a depth image are partitioned into arbitrary shapes, wherein the first partition is spatially connected or spatially disconnected, and the second partition is spatially connected or spatially disconnected.

26. The apparatus according to any one of claims 22 to 25, wherein the processing module is specifically configured to acquire the first residual, and use a sum value of the first residual and the prediction value of the first partition as the first reconstruction value, and acquire the second residual, and use a sum value of the second residual and the prediction value of the second partition as the second reconstruction value.

27. The apparatus according to any one of claims 22 to 25, wherein the processing module is specifically configured to acquire the first residual, and map the first residual into a seventh mapping value, and acquire the second residual, and map the second residual into an eighth mapping value; and acquire a sum value of the prediction value of the first partition and the seventh mapping value as the first reconstruction value, and acquire a sum value of the prediction value of the second partition and the eighth mapping value as the second reconstruction value.

28. The apparatus according to any one of claims 22 to 25, wherein the processing module is specifically configured to acquire the prediction value of the first partition, and map the prediction value of the first partition into a ninth mapping value, and acquire the prediction value of the second partition, and map the prediction value of the second partition into a tenth mapping value; and acquire a sum value of the ninth mapping value and the first residual, map the sum value into an eleventh mapping value, and use the eleventh mapping value as the first reconstruction value, and acquire a sum value of the tenth mapping value and the second residual, map the sum value into a twelfth mapping value, and use the twelfth mapping value as the second reconstruction value.

Acquire a prediction value of a first partition and a prediction value of a second partition from coded sample points adjacent to a current image block

101

Obtain a first residual according to an average value of numerical values of sample points in the first partition and the prediction value of the first partition, and obtain a second residual according to an average value of numerical values of sample points in the second partition and the prediction value of the second partition

102

Code the foregoing first residual and the foregoing second residual

103

FIG. 1

FIG. 2

FIG. 3

FIG. 4

FIG. 5

FIG. 6

Acquire a prediction value of a first partition and a prediction value of a second partition from decoded sample points adjacent to a current image block — 701

Obtain a first reconstruction value according to a first residual and the prediction value of the first partition, and obtain a second reconstruction value according to a second residual and the prediction value of the second partition — 702

Perform a decoding operation according to the first reconstruction value and the second reconstruction value — 703

FIG. 7

801 — Acquiring module

802 — Processing module

803 — Coding module

FIG. 8

901 — Acquiring module

902 — Processing module

903 — Decoding module

FIG. 9

400

```
┌─────────────────────────────────────────────────┐
│                                                 │
│   ┌──────────────────┐      ┌──────────────────┐ │
│   │                  │      │                  │ │
│   │   Memory 410     │──────│  Processor 420   │ │
│   │                  │      │                  │ │
│   └──────────────────┘      └──────────────────┘ │
│                                                 │
└─────────────────────────────────────────────────┘
```

FIG. 10

500

```
┌─────────────────────────────────────────────────┐
│                                                 │
│   ┌──────────────────┐      ┌──────────────────┐ │
│   │                  │      │                  │ │
│   │   Memory 510     │──────│  Processor 520   │ │
│   │                  │      │                  │ │
│   └──────────────────┘      └──────────────────┘ │
│                                                 │
└─────────────────────────────────────────────────┘
```

FIG. 11

# INTERNATIONAL SEARCH REPORT

| | International application No. |
|---|---|
| | **PCT/CN2015/073744** |

## A. CLASSIFICATION OF SUBJECT MATTER

H04N 13/00 (2006.01) i

According to International Patent Classification (IPC) or to both national classification and IPC

## B. FIELDS SEARCHED

Minimum documentation searched (classification system followed by classification symbols)
H04N

Documentation searched other than minimum documentation to the extent that such documents are included in the fields searched

Electronic data base consulted during the international search (name of data base and, where practicable, search terms used)

CNABS, CNKI, CNTXT: depth, code, decode, codec, sample point, sample value, predict, regional, block, divide, adjacent, difference, underwent, column, operation, reconstruct

VEN: depth, code, decode, sample, predict, partition, area, block, divide, adjacent, line, row, operation, reconstruct, rebuild

## C. DOCUMENTS CONSIDERED TO BE RELEVANT

| Category* | Citation of document, with indication, where appropriate, of the relevant passages | Relevant to claim No. |
|---|---|---|
| PX | CN 103841405 A (HUAWEI TECHNOLOGIES CO., LTD.), 04 June 2014 (04.06.2014), description, paragraphs [0083]-[0169] | 1-28 |
| Y | CN 103067715 A (HUAWEI TECHNOLOGIES CO., LTD.), 24 April 2013 (24.04.2013), description, paragraphs [0122]-[0289] | 1-28 |
| Y | WO 2013032423 A1 (THOMSON LICENSING LLC.), 07 March 2013 (07.03.2013), description, page 15, lines 14-23, page 26, lines 17-24, page 27, lines 16-23 and page 27, line 28 to page 28, line 7, and figures 3-8 | 1-28 |
| A | CN 102790892 A (TSINGHUA UNIVERSITY et al.), 21 November 2012 (21.11.2012), the whole document | 1-28 |
| A | CN 101911700 A (THOMSON LICENSING LLC.), 08 December 2010 (08.12.2010), the whole document | 1-28 |
| A | CN 101500159 A (HUAWEI TECHNOLOGIES CO., LTD. et al.), 05 August 2009 (05.08.2009), the whole document | 1-28 |

☐ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 June 2015 (05.06.2015) | **12 June 2015 (12.06.2015)** |

| Name and mailing address of the ISA/CN: | Authorized officer |
|---|---|
| State Intellectual Property Office of the P. R. China No. 6, Xitucheng Road, Jimenqiao Haidian District, Beijing 100088, China Facsimile No.: (86-10) 62019451 | **WANG, Bo** Telephone No.: (86-10) **62089145** |

Form PCT/ISA/210 (second sheet) (July 2009)

## INTERNATIONAL SEARCH REPORT
### Information on patent family members

International application No.

**PCT/CN2015/073744**

| Patent Documents referred in the Report | Publication Date | Patent Family | Publication Date |
|---|---|---|---|
| CN 103841405 A | 04 June 2014 | None | |
| CN 103067715 A | 24 April 2013 | WO 2014108093 A1 | 17 July 2014 |
| WO 2013032423 A1 | 07 March 2013 | CN 103765474 A | 30 April 2014 |
| | | JP 2014529955 A | 13 November 2014 |
| | | EP 2748794 A1 | 02 July 2014 |
| | | US 2014184744 A1 | 03 July 2014 |
| | | KR 20140056300 A | 09 May 2014 |
| CN 102790892 A | 21 November 2012 | CN 102790892 B | 11 June 2014 |
| CN 101911700 A | 08 December 2010 | JP 2011509631 A | 24 March 2011 |
| | | WO 2009091383 A3 | 11 September 2009 |
| | | JP 2014003682 A | 09 January 2014 |
| | | EP 2232875 A2 | 29 September 2010 |
| | | KR 20100105877 A | 30 September 2010 |
| | | WO 2009091383 A2 | 23 July 2009 |
| | | US 2010284466 A1 | 11 November 2010 |
| CN 101500159 A | 05 August 2009 | WO 2009097810 A1 | 13 August 2009 |
| | | CN 101500159 B | 11 January 2012 |

Form PCT/ISA/210 (patent family annex) (July 2009)